# EUROPÄISCHE PATENTANMELDUNG

(11) **EP 0 749 222 A2**
(43) Veröffentlichungstag der Anmeldung: **18.12.1996**
(21) Anmeldenummer: 96109053.7
(22) Anmeldetag: 05.06.1996
(51) Int. Cl.: H04J 3/24

(54) **ATM-Kommunikationseinrichtung**

(30) Priorität: 09.06.1995 DE 19521069
(71) Anmelder: SIEMENS AKTIENGESELLSCHAFT, 80333 München (DE)
(72) Erfinder: Riedel, Michael, Dipl.-Ing., 01157 Dresden (DE)

(57) **Zusammenfassung**

Die ATM-Kommunikationseinrichtung (ASN) weist an ihren Anschlüssen für ein statistisches Multiplexen von Nachrichtenzellen ausgelegte eingangsseitige und ausgangsseitige Multiplexeinrichtungen (SMU1,...,SMUn) auf. In den eingangsseitigen Multiplexeinrichtungen sind den ausgangsseitigen Multiplexeinrichtungen individuell zuordenbare Eingangs-Warteschlangen für eine Speicherung zu übertragender Nachrichtenzellen geführt. Darüber hinaus sind in diesen eingangsseitigen und ausgangsseitigen Multiplexeinrichtungen jeweils Angaben bezüglich der momentanen Belegung der an dem jeweiligen Anschluß zur Verfügung stehenden Bandbreite festgehalten. Für die Übertragung von Nachrichtenzellen von eingangsseitigen Multiplexeinrichtungen zu einer zugeordneten ausgangsseitigen Multiplexeinrichtung wird eine Flußsteuerung derart durchgeführt, daß von den eingangsseitigen Multiplexeinrichtungen jeweils für eine Anforderung einer bestimmten Bandbreite ein Anforderungssignal zu der ausgangsseitigen Multiplexeinrichtung hin übertragen wird. Steht momentan ausgangsseitig keine freie Bandbreite zur Verfügung, so werden die einzelnen Anforderungssignale in eine Anforderungswarteschlange eingefügt, die bei freiwerdender Bandbreite abgearbeitet wird. Bei freiwerdender Bandbreite wird der jeweiligen eingangsseitigen Multiplexeinrichtung mit einem Angebotssignal eine bestimmte Bandbreite angeboten. Dieses Angebotssignal wird unter Angabe der tatsächlich benötigten Bandbreite quittiert.

## Beschreibung

Die Erfindung betrifft eine ATM-Kommunikationseinrichtung gemäß Oberbegriff des Patentanspruches 1. Eine derartige ATM-Kommunikationseinrichtung ist bereits aus "Proceedings Vol. 1, ISS'95, World Telecommunication Congress", Berlin, 23. bis 28. April 1995, Seiten 273 bis 277, bekannt. Bei dieser bekannten ATM-Kommunikationseinrichtung werden die von eingangsseitigen Multiplexeinrichtungen nach einer Zuteilung von eingangsseiiger Bandbreite an eine ausgangsseitige Multiplexeinrichtung abgegebenen Anforderungssignale, mit denen eine Zuteilung von ausgangsseitiger Bandbreite angefordert wird, in eine dieser ausgangsseitigen Multiplexeinrichtung zugehörige Anforderungswarteschlange eingefügt, falls momentan keine freie Bandbreite zur Verfügung steht. Die angeforderte Bandbreite bleibt dabei in der jeweiligen eingangsseitigen Multiplexeinrichtung reserviert. Die zunächst gespeicherten Anforderungssignale werden dann bei freiwerdender Bandbreite in der Reihenfolge ihrer Aufnahme abgearbeitet, indem der jeweils in Frage kommenden eingangsseitigen Multiplexeinrichtung eine verfügbare Bandbreite zugeteilt wird.

Es ist nun Aufgabe der vorliegenden Erfindung, einen Weg zu zeigen, wie eine ATM-Kommunikationseinrichtung gemäß Oberbegriff des Patentanspruchs 1 ausgebildet werden kann, um die Flußsteuerung für die Übertragung von Nachrichtenzellen im Hinblick auf die Zuteilung von Bandbreite für die einzelnen, mit einer ausgangsseitigen Multiplexeinrichtung verbundenen eingangsseitigen Multiplexeinrichtungen zu optimieren.

Gelöst wird diese Aufgabe durch die im Patentanspruch 1 angegebenen Merkmale. Die Erfindung bringt dabei den Vorteil mit sich, daß durch eine ausgangsseitige Multiplexeinrichtung, in welcher ein noch nicht bearbeitetes, d.h. in der zugehörigen Anforderungswarteschlange festgehaltenes Anforderungssignal für eine eingangsseitige Multiplexeinrichtung vorliegt, bei Freiwerden von Bandbreite nicht die mit diesem Anforderungssignal angeforderte Bandbreite unmittelbar zugeteilt wird, sondern der betreffenden eingangsseitigen Multiplexeinrichtung zunächst ein Angebotssignal für die Inanspruchnahme einer gerade zur Verfügung stehenden Bandbreite zugeführt wird. Durch die betreffende eingangsseitige Multiplexeinrichtung kann dann unter Berücksichtigung der momentanen Verkehrsbelastung, welche beispielsweise durch Überprüfen des Füllstandes der abzuarbeitenden Eingangs-Warteschlange ermittelt werden kann, entschieden werden, welche Bandbreite zum Zeitpunkt des Empfangs des Angebotssignals tatsächlich noch benötigt wird. Auf diese Weise wird eine unnötig hohe Bereitstellung von Bandbreite für eine eingangsseitige Multiplexeinrichtung und damit ein Sperren von Bandbreite für die übrigen eingangsseitigen Multiplexeinrichtungen verhindert, wenn sich im Zeitintervall zwischen der Abgabe eines Anforderungssignals und dem Freiwerden von Bandbreite die Verkehrslastverhältnisse in der betreffenden eingangsseitigen Multiplexeinrichtung verändern. Damit kann eine gerade freiwerdende Bandbreite durch eine ausgangsseitige Multiplexeinrichtung gegebenenfalls anteilsmäßig einer Mehrzahl von eingangsseitigen Multiplexeinrichtungen zugewiesen werden.

Vorteilhafte Ausgestaltungen einer ATM-Kommunikationseinrichtung gemäß der vorliegenden Erfindung ergeben sich aus den Patentansprüchen 2 bis 4. Der Vorteil der Ausgestaltungen nach den Patentansprüchen 2 und 4 besteht einerseits in einem geringen Steurungsaufwand für die Übertragung der Flußsteuersignale und andererseits in der Möglichkeit, neben einer dynamischen Zuteilung von Bandbreite für nach einem statistischen Multiplexverfahren zu übertragende Nachrichtenzellenströme auch eine ausreichende Bandbreite für Realzeit-Nachrichtenzellenströme sicherzustellen. Der Vorteil der Ausgestaltung nach Patentanspruch 3 besteht dagegen darin, daß durch das sofortige Quittieren eines in eine Anforderungswarteschlange aufgenommenen Anforderungssignals in der jeweiligen eingangsseitigen Multiplexeinrichtung eine der angeforderten ausgangsseitigen Bandbreite entsprechende eingangsseitige Bandbreite für die in Frage kommende Eingangs-Warteschlange zunächst freigegeben werden kann. Die eingangsseitig freigewordene Bandbreite kann damit anderen Eingangs-Warteschlangen zugeteilt werden.

Im folgenden wird die Erfindung im Zusammenhang mit einem in einer Zeichnung als Ausführungsbeispiel dargestellten Kommunikationssystem näher erläutert.

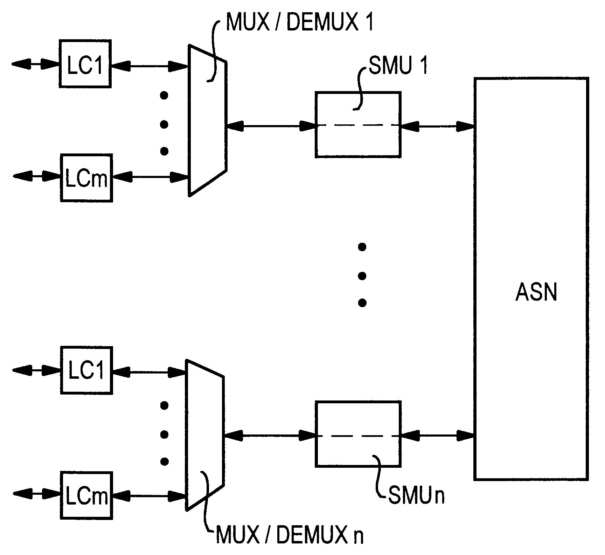

In der Zeichnung ist ein nach einem asynchronen Transfermodus (ATM) arbeitendes Kommunikationssystem dargestellt, welches über ein Koppelnetz ASN als zentrale Einrichtung verfügt. Bei diesem Koppelnetz möge es sich dabei beispielsweise um einen für virtuelle Wählverbindungen ausgelegten Vermittlungsknoten oder um einen Knoten für Festverbindungen, welcher auch als "Cross Connect" bezeichnet ist, handeln. An mit 1,...,n bezeichnete bidirektionale Anschlüsse des Koppelnetzes ASN ist jeweils eine Einrichtung für ein statistisches Multiplexen angeschlossen. Diese Einrichtungen, die entsprechend ihrer Zuordnung zu den einzelnen Anschlüssen mit SMU1,...,SMUn bezeichnet sind, sind bei dem vorliegenden Ausführungsbeispiel derart ausgebildet, daß diese jeweils nach einem statistischen Multiplexprinzip einen über eine Übertragungsleitung ankommenden Nachrichtenzellenstrom an das Koppelnetz ASN weiterleiten und andererseits einen von diesem her zugeführten Nachrichtenzellenstrom als abgehenden Nachrichtenzellenstrom an die jeweilige Übertragungsleitung abgeben. Bei dem vorliegenden Ausführungsbeispiel sind die einzelnen Übertragungsleitungen jeweils mit einer Multiplexeinrichtung abgeschlossen, die in üblicher Weise über Einzelleitungen zugeführte Nachrichtenzellenströme zu einem Multiplex-Nachrichtenzellenstrom zusammenfassen bzw. einen solchen Multiplex-Nachrichtenzellenstrom auf diese Einzelleitungen aufteilen. Diese Multiplexeinrichtungen, die entsprechend ihrer Zuordnung zu den Einrichtungen SMU1,...,SMUn mit MUX/DEMUX1,...,MUX/DEMUXn bezeichnet sind, sind hierfür auf der Einzelleitungsseite mit Leitungsanschlußeinrichtungen LC1,...,LCm verbunden, an welche beispielsweise Einzelteilnehmereinrichtungen anschließbar sind.

Die Einrichtungen SMU1,...,SMUn weisen bei dem vorliegenden Ausführungsbeispiel den beiden Übertragungsrichtungen individuell zugeordnete Zweige auf. Die beiden Zweige werden im folgenden als eingangsseitige Multiplexeinrichtung und ausgangsseitige Multiplexeinrichtung bezeichnet. Dabei sind in den eingangsseitigen Multiplexeinrichtungen Puffer vorgesehen, in welchen die aufgenommenen Nachrichtenzellen vor einer Weiterleitung an das Koppelnetz ASN zwischengespeichert werden. In diesen Puffern sind jeweils logische Eingangs-Warteschlangen geführt, die den einzelnen Anschlüssen des Koppelnetzes ASN in Ausgangsrichtung und damit den genannten ausgangsseitigen Multiplexeinrichtungen individuell zuordenbar sind. In diese logischen Eingangs-Warteschlangen werden die von der jeweiligen eingangsseitigen Multiplexeinrichtung aufgenommenen Nachrichtenzellen in Abhängigkeit von deren Ziel eingefügt. Das jeweilige Ziel ergibt sich dabei in bekannter Weise aus der den einzelnen Nachrichtenzellen jeweils beigefügten Kennung für die jeweilige virtuelle Verbindung VC bzw. virtuelle Pfadverbindung VP. Da die Struktur von Nachrichtenzellen und insbesondere die Bedeutung der in einer solchen Nachrichtenzelle geführten Steuersignale, unter welche auch die gerade erwähnte Verbindungskennung fällt, allgemein bekannt sind, wird im folgenden hierauf nicht näher eingegangen.

Die genannten Anschlüsse des Koppelnetzes ASN sind jeweils für eine bestimmte maximale Bandbreite, d.h. maximale Übertagungsbitrate, ausgelegt. Die Verwaltung dieser Bandbreite und damit deren Aufteilung auf die einzelnen im Multiplex dem Koppelnetz ASN zuzuführenden bzw. von diesen wegführenden Nachrichtenzellenströme erfolgt durch die jeweilige eingangsseitige bzw. ausgangsseitige Multiplexeinrichtung.

Für die Weiterleitung der in die einzelnen logischen Eingangs-Warteschlangen aufgenommenen Nachrichtenzellen ist nun eine Flußsteuerung vorgesehen, welche im folgenden näher erläutert wird.

Dabei wird als Beispiel davon ausgegangen, daß von einer Mehrzahl eingangsseitiger Multiplexeinrichtungen Nachrichtenzellen zu dem gleichen Ziel, d.h. zu ein und derselben ausgangsseitigen Multiplexeinrichtung hin, zu übertragen sind. Dieser ausgangsseitigen Multiplexeinrichtung steht, wie bereits zuvor erwähnt, für die Aufnahme von Nachrichtenzellen eine bestimmte Bandbreite, d.h. eine bestimmte maximale Übertragungsbitrate, zur Verfügung. Diese Bandbreite sei zunächst der genannten Mehrzahl von eingangsseitigen Multiplexeinrichtungen anteilsmäßig zugeteilt.

Die in den eingangsseitigen Multiplexeinrichtungen jeweils in Frage kommende logische Eingangs-Warteschlange wird entsprechend der zugeteilten Bandbreite abgearbeitet. Überschreitet nun aufgrund einer erhöhten Verkehrsbelastung der Füllgrad einer solchen logischen Eingangs-Warteschlange einen festgelegten Schwellwert, so wird zunächst durch die zugehörige eingangsseitige Multiplexeinrichtung überprüft, ob eingangsseitig eine freie Bandbreite zur Verfügung steht. Ist dies der Fall, so wird der betreffenden Eingangs-Warteschlange je nach der Größe der freien Bandbreite maximal eine dem Schwellwert entsprechene eingangsseitige Bandbreite zugeteilt. Anschließend wird von der jeweiligen eingangsseitigen Multiplexeinrichtung ein Anforderungssignal ("Request Message") zu der dieser logischen Eingangs-Warteschlange zugeordneten ausgangsseitigen Multiplexeinrichtung hin übertragen, durch welches eine entsprechende ausgangsseitige Bandbreite angefordert wird. Hierfür sind in dem Anforderungssignal entsprechende Bandbreitenangaben enthalten. Auf dieses Anforderungssignal hin wird von der ausgangsseitigen Multiplexeinrichtung ein Bestätigungssignal in Gegenrichtung, d.h. zu der jeweiligen eingangsseitigen Multiplexeinrichtung hin, übertragen, in welchem Angaben bezüglich der aufgrund des Anforderungssignals zugeteilten ausgangsseitigen Bandbreite enthalten sind. Die Abarbeitung der in Frage kommenden logischen Eingangs-Warteschlange wird dann entsprechend der nun zur Verfügung stehenden Bandbreite angepaßt.

Die aufgrund eines Anforderungssignals von der ausgangsseitigen Multiplexeinrichtung zur Verfügung gestellte ausgangsseitige Bandbreite kann niedriger sein als die mit diesem Anforderungssignal angeforderte Bandbreite. Im Extremfall kann der Wert für eine zugeteilte Bandbreite "0" sein, so daß das zuvor genannte, übertragene Bestätigungssignal eine negative Quittung darstellt. Ein mit einer solchen negativen Quittung bestätigtes Anforderungssignal wird in der ausgangsseitigen Multiplexeinrichtung in eine Anforderungswarteschlange eingefügt, welche bei freiwerdender ausgangsseitiger Bandbreite nach dem FIFO-Prinzip abgearbeitet wird.

Ist eine logische Eingangs-Warteschlange in einer eingangsseitigen Multiplexeinrichtung vollständig abgearbeitet, d.h. liegt eine leere logische Eingangs-Warteschlange vor, so wird von der betreffenden eingangsseitigen Multiplexeinrichtung die bisher belegte eingangseitige Bandbreite freigegeben und ein Freigabesignal ("Cleardown Message") zu der zugeordneten ausgangsseitigen Multiplexeinrichtung hin übertragen, mit welchem die ursprünglich für diese logische Eingangs-Warteschlange zur Verfügung gestellte ausgangsseitige Bandbreite ebenfalls freigegeben wird. Diese Freigabe wird durch die ausgangsseitige Multiplexeinrichtung mit einem in Gegenrichtung übertragenen Bestätigungssignal quittiert. Darüber hinaus werden aufgrund der nunmehr freigewordenen ausgangsseitigen Bandbreite je nach deren Größe ein oder mehrere in der zuvor genannten Anforderungswarteschlange der ausgangsseitigen Multiplexeinrichtung vorhandene Anforderungssignale abgearbeitet. Dies erfolgt in der Weise, daß der eingangsseitigen Multiplexeinrichtung, welche dem als nächsten für eine Bearbeitung anstehenden Anforderungssignal zugeordnet ist, ein Angebotssignal ("Offer Message") zugesandt wird, mit welchem dieser eingangsseitigen Multiplexeinrichtung für die Abarbeitung der in Frage kommenden logischen Eingangs-Warteschlange eine der freigewordenen Bandbreite entsprechende ausgangsseitige Bandbreite angeboten wird. Diese angebotene Bandbreite kann dabei beispielsweise der ursprünglich angeforderten Bandbreite entsprechen. In der betreffenden eingangsseitigen Multiplexeinrichtung wird daraufhin überprüft, welcher Anteil der angebotenen Bandbreite im Hinblick auf die momentane Verkehrslast und die eingangseitig vorhandene Bandbreite tatsächlich benötigt wird. Die in Anspruch genommene ausgangsseitige Bandbreite wird dabei der ausgangsseitigen Multiplexeinrichtung durch ein Bestätigungssignal mitgeteilt. Ist die zuvor ausgangsseitig freigewordene Bandbreite durch die gerade beanspruchte Bandbreite noch nicht ausgeschöpft, so wiederholen sich die Steuerungsvorgänge in entsprechender Weise für das nächste in der Anforderungswarteschlange anstehende Anforderungssignal.

Die zuvor genannten Anforderungs-, Freigabe- und Angebotssignale sowie die Bestätigungssignale werden bei dem vorliegenden Ausführungsbeispiel als gesondert gekennzeichnete Nachrichtenzellen in die zwischen den eingangsseitigen und ausgangsseitigen Multiplexeinrichtungen zu übertragenden Nachrichtenzellenströme eingefügt.

Darüber hinaus sei darauf hingewiesen, daß die oben genannten ausgangsseitigen Multiplexeinrichtungen jeweils derart ausgebildet sind, daß durch diese eine sogenannte "Shaping"-Funktion realisiert wird, indem die Weiterleitung von Nachrichtenzellen entsprechend der für die einzelnen virtuellen Verbindungen festgelegten Verkehrsparameter erfolgt. Darüber hinaus ist bei dem vorliegenden Ausführungsbeispiel vorgesehen, daß von den eingangsseitigen und ausgangsseitigen Multiplexeinrichtungen jeweils von der maximal zur Verfügung stehenden Bandbreite ein Teil für Realzeit-Verbindungen reserviert und lediglich die verbleibende Bandbreite in eine zuvor beschriebene Flußsteuerung einbezogen wird. Außerdem kann die zuvor erläuterte Flußsteuerung auch derart modifiziert sein, daß für die zuvor genannten logischen Eingangs-Warteschlangen jeweils auch eine Mehrzahl von Schwellwerten für den Füllstand festgelegt sein kann und mit einem Anforderungssignal gegebenenfalls eine dem jeweiligen Schwellwert entsprechende Bandbreite angefordert wird.

## Patentansprüche

1. ATM-Kommunikationseinrichtung(ASN) mit an deren Anschlüßen vorgesehenen, für ein statistisches Multiplexen von Nachrichtenzellen ausgelegten eingangsseitigen und ausgangsseitigen Multiplexeinrichtungen (SMU),
wobei in den einzelnen eingangsseitigen Multiplexeinrichtungen jeweils den ausgangsseitigen Multiplexeinrichtungen individuell zuordenbare Eingangs-Warteschlangen für die Speicherung zu übertragender Nachrichtenzellen geführt und in den eingangsseitigen und ausgangsseitigen Multiplexeinrichtungen jeweils Angaben bezüglich der momemtanen Belegung der an dem jeweiligen Anschluß zur Verfügung stehenden Bandbreite festgehalten sind
und wobei für die Übertragung von Nachrichtenzellen von eingangsseitigen Multiplexeinrichtungen zu einer diesen zugeordneten ausgangsseitigen Multiplexeinrichtung eine Flußsteuerung derart durchgeführt wird, daß bei Überschreiten zumindest eines festgelegten Schwellwertes des Füllgrades einer der betreffenden ausgangsseitigen Multiplexeinrichtung zugeordneten Eingangs-Warteschlange von der in Frage kommenden eingangsseitigen Multiplexeinrichtung nach einer Zuteilung einer eingangseitigen Bandbreite zu der betreffenden ausgangsseitigen Multiplexeinrichtung hin ein Anforderungssignal übertragen wird, mit welchem eine der eingangsseitig zugeteilten Bandbreite entsprechende ausgangsseitige Bandbreite für die Abarbeitung der betreffenden Eingangs-Warteschlange angefordert wird, daß bei Nichtverfügbarkeit einer freien ausgangsseitigen Bandbreite das Anforderungssignal in eine in der betreffenden ausgangsseitigen Multiplexeinrichtung geführte Anforderungs-Warteschlange eingefügt wird und daß nach der Abarbeitung einer der betreffenden ausgangsseitigen Multiplexeinrichtung zugeordneten Eingangs-Warteschlange von der dieser Eingangs-Warteschlange zugehörigen eingangsseitigen Multiplexeinrichtung die eingansseitig von dieser Eingans-Warteschlange bisher belegte Bandbreite freigegeben und ein Freigabesignal zu der betreffenden ausgangsseitigen Multiplexeinrichtung hin übertragen wird, durch welches eine Freigabe der bis dahin für diese Eingangs-Warteschlange belegten ausgangsseitigen Bandbreite angezeigt wird,
**dadurch gekennzeichnet**,
daß mit dem Freiwerden von ausgangsseitiger Bandbreite bei Vorliegen einer mit zumindest einem Anforderungssignal gefüllten Anforderungs-Warteschlange von der betreffenden ausgangsseitigen Multiplexeinrichtung zunächst ein Angebotssignal zu derjenigen eingangsseitigen Multiplexeinrichtung hin übertragen wird, von welcher zuvor das für eine Abarbeitung gerade anstehende Anforderungssignal abgegeben worden ist,
daß in dem Angebotssignal Angaben bezüglich der zur Verfügung zu stellenden ausgangsseitigen Bandbreite enthalten sind, und daß von der betreffenden eingangsseitigen Multiplexeinrichtung ein Bestätigungssignal rückübertragen wird, in welchem Angaben bezüglich der tatsächlich in Anspruch genommenen ausgangsseitigen Bandbreite enthalten sind.

2. ATM-Kommunikationseinrichtung nach Anspruch 1,
**dadurch gekennzeichnet**,
daß die genannten Flußsteuersignale in Form gesondert gekennzeichneter Nachrichtenzellen zusammen mit den übrigen Nachrichtenzellen zwischen den eingangsseitigen und ausgangsseitigen Multiplexeinrichtungen übertragen werden.

3. ATM-Kommunikationseinrichtung nach Anspruch 1 oder 2,
**dadurch gekennzeichnet**,
daß die Aufnahme eines Anforderungssignals in die Anforderungswarteschlange der betreffenden ausgangsseitigen Multiplexeinrichtung der in Frage kommenden eingangsseitigen Multiplexeinrichtung durch ein zu dieser hin übertragenes Bestätigungssignal quittiert wird.

4. ATM-Kommunikationseinrichtung nach einem der Ansprüche 1 bis 3,
**dadurch gekennzeichnet**,
daß von den eingangsseitigen und ausgangsseitigen Multiplexeinrichtung jeweils ein Teil der insgesamt zur Verfügung stehenden Bandbreite für Realzeit-Verkehr reserviert und lediglich der verbleibende Teil der Bandbreite für die Flußsteuerung berücksichtigt wird.
